# FASCICULE DE BREVET EUROPEEN

(11) **EP 1 117 290 B1**
(45) Date de publication et mention de la délivrance du brevet: **06.06.2007**
(21) Numéro de dépôt: 98920569.5
(22) Date de dépôt: 06.04.1998
(51) Int. Cl.: A01G 9/12, A01G 27/00

(54) **DISPOSITIF COMBINE DE TUTEURAGE ET D'ARROSAGE DE PLANTS**
KOMBINIERTE STÜTZ- UND BEWÄSSERUNGSVORRICHTUNG FÜR PFLANZEN
COMBINED DEVICE FOR SUPPORT AND WATERING PLANTS

(30) Priorité: 08.04.1997 FR 9704377; 09.03.1998 FR 9803091
(43) Date de publication de la demande: 25.07.2001
(73) Titulaire: Vivien, Dominique, 85170 Belleville-sur-Vie (FR); Clavier, Gérard, 44650 Lege (FR)
(72) Inventeur: Vivien, Dominique, 85170 Belleville-sur-Vie (FR); Guilbaud, Dominique, 85170 Belleville-sur-Vie (FR)
(86) Numéro de dépôt international: PCT/FR1998/000689
(87) Numéro de publication internationale: WO 1998/044778

(56) Documents cités:
- WO-A-92/14351
- CA-A- 1 226 735
- DE-A- 2 747 621
- FR-A- 1 361 503
- FR-A- 2 735 653
- US-A- 3 471 968
- US-A- 4 546 571
- US-A- 4 663 884
- US-A- 4 745 706

## Description

La présente invention concerne un dispositif combiné de tuteurage et d'arrosage de plants.

Elle concerne, plus précisément, un dispositif du type consistant en une tige tubulaire dont l'espace intérieur fait office de réserve d'eau et/ou de liquide nutritif, le remplissage de cette cavité se faisant en partie haute de la tige, tandis que sa vidange s'opère en sa partie basse, via un système de distribution goutte-à-goutte, notamment à débit réglable.

Des tuteurs creux, servant à l'arrosage des plants qu'ils supportent, ont déjà été proposés.

Comme éléments illustratifs de l'état de la technique en la matière, on peut citer notamment les documents de brevet FR-A-1 361 503, FR-A-2 735 653, US-A-4 745 706, CA-A-1 226 735, WO 92/14351 et DE-U-90 04425.

Ces tuteurs connus affectent la forme d'une tige tubulaire possédant en partie haute une ouverture de remplissage et, en partie basse, un orifice de distribution permettant à l'eau ou au liquide nutritif qui est contenu dans la tige de s'écouler dans le sol dans lequel la tige est partiellement enfoncée, ou dans un pot dont elle est solidaire.

En plus de sa fonction classique de maintien du plant, ou des plants, au(x)quel(s) il est associé, ce genre de dispositif assure par conséquent son arrosage et/ou sa nutrition. L'orifice de sortie est adapté pour autoriser un écoulement à faible débit, qui alimente les racines, soit directement, soit par l'intermédiaire d'un conduit distributeur, de manière parcimonieuse et régulière, en général au goutte-à-goutte.

Ce mode d'arrosage est à la fois efficace et économique.

Dans certaines réalisations il est possible de régler le débit de vidange.

Selon le FR-A-1 361 503, ce réglage s'effectue en partie haute, en jouant sur l'entrée d'air dans le tube.

Selon le WO 92/14351, décrivant un dispositif selon la première partie de la revendication 1, le réglage se fait en partie basse, au niveau de l'évacuation, grâce à un système à labyrinthe ajustable.

Ces dispositifs connus présentent l'inconvénient que le débit de la vidange est une fonction décroissante de la pression du liquide à la base du tube et, corrélativement, de la hauteur de la colonne de liquide dans celui-ci.

Le débit décroît donc progressivement au fur et à mesure que le dispositif se vide.

Or, il est important que les plants reçoivent une quantité d'eau régulière et constante, entre deux remplissages successifs du dispositif.

La présente invention se propose de résoudre ce problème.

A cet effet, et conformément à l'invention, le dispositif comporte des moyens pour maintenir constant, ou sensiblement constant, le niveau de liquide alimentant le système de distribution goutte-à-goutte. Le dispositif selon l'invention est caractérisé en ce que :
- l'espace intérieur de la tige tubulaire est subdivisé par une cloison transversale en deux chambres, à savoir une chambre supérieure dans laquelle se fait l'approvisionnement en eau et/ou en liquide nutritif du dispositif, et une chambre inférieure qui débouche sur le système de distribution goutte-à-goutte, et ladite cloison comporte une valve apte à contrôler l'écoulement du liquide de la chambre supérieure dans la chambre inférieure en fonction du niveau de liquide dans cette dernière ;
- cette valve comprend un obturateur à pointeau qui est solidaire d'un flotteur disposé dans ladite chambre inférieure et coopère avec un orifice traversant ladite cloison ;
- ce flotteur a la forme générale d'un disque portant une tige axiale dont l'extrémité libre constitue l'obturateur ;
- ladite chambre inférieure se trouve à la pression atmosphérique, grâce à un perçage disposé dans sa partie supérieure et traversant la paroi de la tige ;

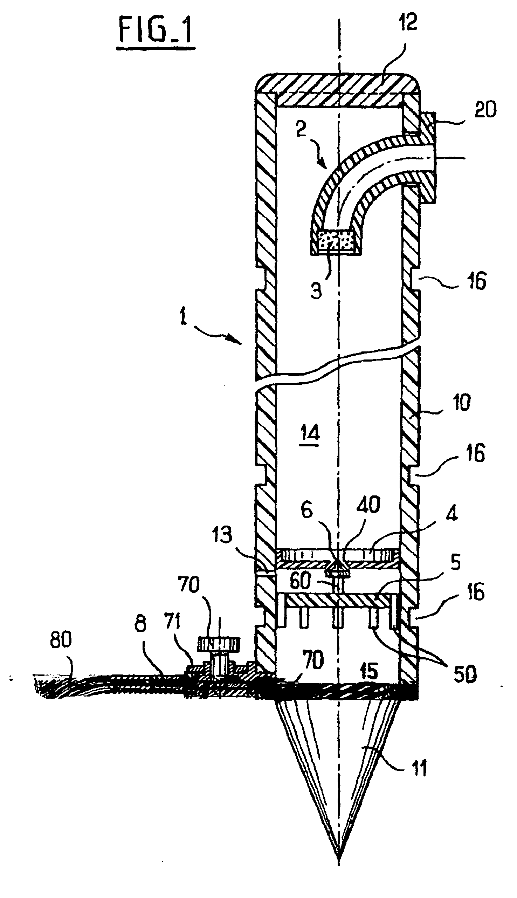

D'autres caractéristiques et avantages de l'invention apparaîtront de la description qui va maintenant en être faite, en référence au dessin annexé à la figure 1 qui représente, en coupe axiale, un mode de réalisation possible du dispositif.

Ce dispositif consiste en une tige tubulaire 1 en matière plastique dont les extrémités sont obturées, en partie basse, par un élément de pied effilé et pointu 11 et, en partie haute, par un bouchon, ou couvercle, 12. Les éléments 11 et 12 sont par exemple emboîtés et collés dans l'extrémité du tube.

La tige 1 est, par exemple, cylindrique, et le pied 11 conique. Le pied 11 est destiné à être enfoncé dans le sol. Il peut être avantageusement garni d'ailettes améliorant l'ancrage. Le bouchon 12 est suffisamment solide pour permettre l'enfoncement à l'aide d'un marteau.

Les dimensions du dispositif sont adaptées, bien sûr, à la nature et à la taille des végétaux concernés.

A titre indicatif, la longueur de la tige 1 est comprise entre 1,5 et 2 mètres, son diamètre entre 50 et 100 millimètres, et l'épaisseur de sa paroi est de quelques millimètres.

En partie haute, la paroi 10 du tube est percée d'une ouverture recevant une tubulure coudée 2, également en matière plastique. Celle-ci possède une collerette 20 venant en appui contre le bord de l'ouverture. La fixation est réalisée par simple emboîtement. La tubulure 2 est disposée à l'intérieur de la tige creuse 1. Elle a une forme générale en arc de cercle, et son embouchure supérieure, qui traverse la paroi 10, a une orientation radiale, perpendiculaire à l'axe de la tige 1. Son embouchure inférieure ayant une orientation axiale, dirigée vers le bas.

Dans cette embouchure, est monté un filtre 3. Il s'agit par exemple d'un petit tampon cylindrique en fibres synthétiques, avantageusement amovible.

On observera que la paroi 10 est creusée, sur sa face externe, de gorges annulaires 16. De manière bien connue, leur fonction est de recevoir et retenir les liens d'attache des plants.

Le dispositif comporte un système de vidange du type goutte-à-goutte situé à la base de la tige 1, juste au-dessus du pied 11. Il comprend un corps 7 en matière plastique monté dans une ouverture radiale traversant la paroi 10 est fixé dans celle-ci de manière étanche, par exemple par emboîtement et collage, ou par vissage. Le corps 7 est traversé par un alésage de vidange 70 qui fait communiquer l'espace intérieur du tube 1 avec l'extérieur. Ce système comporte une vis-pointeau 70 permettant de régler la section de passage de l'alésage 70, voire de la fermer complètement. Sur le dessus du corps 7 est montée une rondelle 71 portant une graduation ; la tête de la vis-pointeau 70 porte un repère dont la correspondance avec cette graduation permet d'indiquer le degré d'ouverture du système et, par conséquent, la valeur du débit de vidange.

La graduation (non visible sur la figure) est par exemple une échelle circulaire comprenant la lettre "F' (système fermé) et les chiffres 1 à 6, un tour de vis correspondant à l'ouverture complète de l'alésage 70 à partir de la position fermée.

Selon les utilisations, l'arrosage peut soit se faire directement à partir du système de vidange 7, l'eau et/ou le liquide nutritif s'écoulant alors directement dans le sol, dans lequel la tige 1 est plantée, à proximité immédiate du pied 11, soit indirectement, par l'intermédiaire d'un tuyau distributeur 80.

C'est cette dernière configuration qui est illustrée. Il s'agit d'un conduit souple, par exemple en matière plastique, dont l'extrémité aval (non visible sur la figure) peut être positionnée au mieux, dans la zone d'arrosage souhaitée.

Sur l'exemple représenté, le corps 7 est solidaire d'un embout tubulaire 8 sur lequel est emmanchée l'extrémité amont du conduit 80.

Avantageusement, il s'agit d'une pièce en matériau susceptible de changer de couleur en fonction du degré d'humidité auquel il est exposé.

Comme matériau convenable on peut citer par exemple la céramique.

L'embout 8 possède une collerette visible extérieurement, malgré la présence du conduit 80.

Selon une caractéristique essentielle de l'invention, l'intérieur de la tige tubulaire 1 est compartimentée par une cloison transversale discoïde 4. Cette dernière est collée, de manière étanche, contre la face interne de la paroi 10.

Elle est située à une certaine hauteur au-dessus de l'alésage de vidange 70.

La cloison 4 subdivise donc l'espace intérieur de la tige en une chambre supérieure 14 et une chambre inférieure 15. La chambre supérieure est nettement plus grande que la chambre inférieure.

A titre indicatif, la chambre 14 a une hauteur de quinze à trente fois supérieure à celle de la chambre 15.

La cloison 4 est percée d'un orifice central 40 de faible diamètre, à paroi tronconique, divergeant vers le bas. L'orifice 40 est susceptible d'être obturé par un organe conique 6, de forme complémentaire. Celui-ci constitue la portion d'extrémité libre d'une petite tige axiale 60 portée par un flotteur 5. Il s'agit d'une pièce en matériau léger, approximativement en forme de disque qui porte à sa périphérie des nervures longitudinales 50. Celles-ci assurent le guidage du flotteur en translation dans la chambre 15, à la manière d'un piston, de telle sorte que l'organe 6 soit correctement axé sur l'orifice 40. Il joue le rôle d'un obturateur à pointeau, les éléments 6 et 40 faisant office de valve. Quand le flotteur est en position haute, l'organe 6 est plaqué contre le bord de l'orifice 40 et obture ce dernier (valve fermée). Au contraire, lorsqu'il est en position basse, l'organe 6 se trouve à une certaine distance en-dessous de l'orifice 40, et ce dernier n'est pas obturé (valve ouverte) ; le liquide contenu dans la chambre supérieure 14 est alors libre de s'écouler par gravité dans la chambre inférieure 15, via cet orifice 40. II peut s'écouler aussi librement à la périphérie du flotteur 5, la présence des nervures 50 autorisant le passage du liquide.

Juste en-dessous de la cloison 4, la paroi 10 est traversée par un perçage 13 dont la fonction est de mettre la chambre 15 à la pression atmosphérique.

Nous allons maintenant expliquer le fonctionnement de ce dispositif.

La tige 1 est enfoncée partiellement dans le sol, à proximité du tronc ou de la tige de l'arbuste, ou autre plant, au tuteurage duquel il est affecté, dans une position sensiblement verticale.

Le système de vidange 7, et le conduit 80 demeurent, bien entendu, hors du sol.

Au moyen d'attaches appropriées, tels que des colliers ou liens, le tronc ou la tige de l'arbuste, ou autre plant, est maintenu convenablement accolé contre la tige 1.

Les gorges 16 empêchent les attaches de coulisser inopinément en direction axiale.

En début d'opération le dispositif est vide.

La vis 70 se trouve en position de fermeture du système de vidange.

Le flotteur repose donc, sous l'effet de la gravité, dans le fond de la chambre 15.

Pour remplir le dispositif, on introduit le distributeur d'eau et/ou de liquide nutritif, engrais liquide notamment, par exemple l'embouchure de col d'un arrosoir ou le bec verseur d'un récipient, dans l'ouverture de la tubulure 2.

A cet égard, on notera que - de préférence - cette ouverture est diamétralement opposée au système de vidange 7. Ainsi, si celui-ci se trouve orienté contre la base du tronc du plant, et proche de ce dernier, la présence du tronc ne gène pas l'opération de remplissage.

Le liquide déversé dans la tubulure 2 traverse le filtre 3, qui retient les impuretés et autres particules solides susceptibles de s'y trouver en suspension.

C'est donc un liquide pur qui arrive dans la chambre 14. Le flotteur 5 se trouvant en position basse, ce liquide s'écoule dans la chambre sous-jacente 15 à travers l'orifice 40, qui est dégagé.

Au fur et à mesure du remplissage, le flotteur 5 monte sous l'effet de la poussée d'Archimède, jusqu'à ce que l'organe pointeau 6 obture l'orifice 40. C'est alors la chambre 15 qui se remplit. Lorsque le niveau d'eau arrive à hauteur de la tubulure 2, le dispositif est opérationnel.

En vue de l'arrosage, on positionne l'extrémité aval débouchante sur le sol, dans la zone voulue, et on ouvre le système de vidange. On règle le débit à la valeur souhaitée, en tournant plus ou moins la vis 70 dans le sens de l'ouverture. La graduation présente sur la rondelle 71 permet d'opérer de manière précise.

Le débit choisi dépend, bien sûr, de la variété et de l'âge du plant concerné, ainsi que de la période de l'année au cours de laquelle se fait l'arrosage.

A titre indicatif, le besoin journalier d'un arbre moyen est de deux litres par jour.

L'arrosage s'effectue donc au goutte-à-goutte, le liquide présent dans la chambre 15 s'échappant sous un faible débit - par exemple de l'ordre de 0,5 à 1 dl/h - de cette chambre dans le conduit distributeur 80.

Le flotteur 5 tend donc constamment à redescendre, de sorte que l'obturateur 6 qui lui est solidaire tend à se dégager de l'orifice 40, autorisant ainsi à nouveau le passage d'une certaine quantité d'eau.

Il y a donc une compensation automatique et continue de la fuite due à la vidange dans la chambre basse 15, par amenée de liquide provenant de la chambre haute 14 ; la hauteur de liquide dans la chambre 15 est donc constante en régime normal, c'est-à-dire tant qu'il y a du liquide dans la chambre 14. Cette hauteur correspond à la position haute du flotteur, position illustrée sur la figure. A titre indicatif, elle est par exemple de l'ordre de 70 à 80 mm.

La pression du liquide au niveau de l'alésage 70 qui est directement fonction de cette hauteur puisque la pression au-dessus du flotteur est la pression atmosphérique (grâce au perçage 13) est donc constant. Corrélativement, le débit de vidange - fonction de la pression - est aussi constant.

L'objectif visé est par conséquent atteint.

Lorsque la chambre 14 est vide, l'arrosage se poursuit jusqu'à épuisement du liquide se trouvant dans la chambre 15, avec descente du flotteur 5 et pression décroissante, comme sur les dispositifs classiques. Toutefois, ceci ne se produit qu'en fin d'opération, durant un laps de temps limité (du fait que la chambre 15 est beaucoup plus petite que la chambre 14), et seulement lorsqu'un appoint de liquide n'a pas été fait à temps (avant vidange complète de la chambre 14).

Dans le cas où le dispositif est complètement vide, le changement de couleur de l'embout 8 avertit la personne chargée de surveiller l'arrosage, de la situation.

D'autres types d'indicateurs de vidage pourraient être prévus tels que, par exemple, un index solidaire du flotteur 5 et visible extérieurement.

La présence du filtre 3 prévient l'encrassement du système de valve 6, 40, qui pourrait être cause de son dysfonctionnement. Le filtre peut être changé périodiquement, après désemboîtement de la tubulure 2.

On ne sortirait pas du cadre de l'invention en branchant un ou plusieurs dispositifs tels que décrits ci-dessus à une réserve d'eau, au moyen d'un (ou des) tuyau(x) connecteur(s).

Un même dispositif pourrait être pourvu de plusieurs systèmes de vidange goutte-à-goutte, par exemple de deux systèmes diamétralement opposés.

Il va de soi que l'invention s'adresse également à des dispositifs dont le débit de vidange n'est pas réglable, le goutte-à-goutte se faisant alors à travers un ajutage calibre.

Le remplissage du dispositif pourrait se faire directement par l'extrémité supérieure de la tige, le bouchon 12 étant alors amovible, et un filtre étant prévu à ce niveau.

Ceci est intéressant, notamment, pour des tiges de petit diamètre, dans lesquelles il est difficile de monter la tubulure de remplissage 2.

Le dispositif pourrait avoir des fonctions annexes, par exemple de support d'une vasque ou d'un appareil d'éclairage.

Dans un mode de réalisation possible, la longueur de la tige 60, qui détermine la distance de l'obturateur 6 par rapport au flotteur 5, est réglable. Il s'agit par exemple d'une tige filetée vissée dans le flotteur, le réglage étant fonction du degré de vissage. Il est ainsi possible de faire varier la hauteur du niveau d'eau déterminant la pression de vidange.

La couleur de la tige est avantageusement choisie pour s'intégrer harmonieusement à la végétation concernée.

A titre simplement indicatif, si la tige creuse a une longueur totale de l'ordre de 1 m et un diamètre intérieur de l'ordre de 20 mm, sa capacité est d'environ 30 cl.

Pour une consommation journalière de 1 cl/jour, son autonomie est donc de l'ordre de 30 jours.

## Revendications

1. Dispositif combiné de tuteurage et d'arrosage de plants, qui consiste en une tige tubulaire (1) dont l'espace intérieur fait office de réserve d'eau et/ou de liquide nutritif, le remplissage de cette cavité se faisant en partie haute de la tige (1) tandis que sa vidange s'opère en sa partie basse, via un système de distribution goutte-à-goutte (7) notamment à débit réglable **caractérisé par le fait que** l'espace intérieur de la tige tubulaire (1) est subdivisé par une cloison transversale (4) en deux chambres, à savoir une chambre supérieure (14) dans laquelle se fait l'approvisionnement en eau et/ou en liquide nutritif du dispositif, et une chambre inférieure (15) qui débouche sur le système de distribution goutte-à-goutte (7) et que ladite cloison (4) comporte une valve (6,40) apte à contrôler l'écoulement du liquide de la chambre supérieure (14) dans la chambre inférieure (15) que ladite valve comprend un obturateur à pointeau (6) qui est solidaire d'un flotteur (5) disposé dans ladite chambre inférieure (15) et coopère avec l'orifice (40) traversant ladite cloison (4) que ladite chambre inférieure (15) se trouve à la pression atmosphérique, grâce à un perçage (13) disposé dans sa partie supérieure et traversant la paroi (10) de la tige (1) et permet de maintenir constant,ou sensiblement constant, le niveau alimentant ledit système de distribution goutte-à-goutte (7).

## Claims

1. Combined device for support and watering of plants, consisting of one tubular pipe (1) in which the inside room is a water and/or nutritious liquid container, the filling of this cavity being done at the upper part of the pipe (1) when the emptying is done in the lower part, through a drip by drip watering device (7) notably with an adjustable flow rate **characterized by** the fact that the tubular pipe inside room (1) is subdivided by a crossed partition (4) in two parts, i.e. one upper part (14) in which the filling of water and/or nutritious liquid of the device is done, and one lower part (15) ending by the drip by drip watering device (7) and the aforesaid partition (4) includes a valve (6,40) capable of regulating the liquid flow from the upper part (14) to the lower part (15) and the aforesaid valve includes a pointed shutter (6) dependent on a float (5) taking place in the aforesaid lower part (15) and is linked to the hole (40) crossing the aforesaid partition (4) and the lower part (15) is under air pressure, thanks to a hole (13) in its upper part and across the partition (10) of the pipe (1) and allows to keep constant, or approximately constant, the level feeding the aforesaid drip by drip watering device (7).

## Patentansprüche

1. Kombinierte Stütz- und Bewässerungsvorrichtung für Pflanzen, die aus einer röhrenförmigen Stange (1) besteht, deren Innenraum als Vorratsbehälter für Wasser und/oder flüssigen Nährstoff dient, wobei das Füllen dieses Hohlraums im oberen Teil der Stange (1) erfolgt, während sein Entleeren in ihrem unteren Teil über ein Tröpfchenabgabesystem (7), insbesondere mit einstellbarem Durchfluss, durchgeführt wird, **dadurch gekennzeichnet, dass** der Innenraum der röhrenförmigen Stange (1) durch eine Quertrennwand (4) in zwei Kammern, nämlich eine obere Kammer (14), in der die Speisung der Vorrichtung mit Wasser und/oder flüssigem Nährstoff erfolgt, und eine untere Kammer (15), die in dem Tröpfchenabgabesystem (7) mündet, unterteilt wird, und dass die Trennwand (4) ein Ventil (6, 40) aufweist, das das Fließen der Flüssigkeit aus der oberen Kammer (14) in die untere Kammer (15) steuert, dass das Ventil einen Nadelverschluss (6) umfasst, der fest mit einem in der unteren Kammer (15) angeordneten Schwimmer (5) verbunden ist und mit der die Trennwand (4) durchquerenden Öffnung (40) zusammenwirkt, dass sich die untere Kammer (15) dank einer in ihrem oberen Teil ausgebildeten und die Wand (10) der Stange (1) durchquerenden Bohrung (13) auf Atmosphärendruck befindet und gestattet, den Versorgungsfüllstand des Tröpfchenabgabesystems (7) konstant oder im Wesentlichen konstant zu halten.
